(19)

**Europäisches Patentamt**
**European Patent Office**
**Office européen des brevets**

(11) **EP 1 926 217 A2**

(12) **EUROPEAN PATENT APPLICATION**

(43) Date of publication:
28.05.2008 Bulletin 2008/22

(51) Int Cl.:
*H04B 1/10* (2006.01)

(21) Application number: 07022649.3

(22) Date of filing: 21.11.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: 24.11.2006 KR 20060116859

(71) Applicant: **Samsung Electronics Co., Ltd.**
**Suwon-si, Gyeonggi-do 442-743 (KR)**

(72) Inventors:
• **Oh, Jeong-Tae**
**Yongin-si**
**Gyeonggi-do (KR)**

• **Byun, Myung-Kwang**
**Yeongtong-gu**
**Suwon-si**
**Gyeonggi-do (KR)**
• **Jeon, Jae-Ho**
**Seongnam-si**
**Gyeonggi-do (KR)**
• **Maeng, Seung-Joo**
**Seongnam-si**
**Gyeonggi-do (KR)**

(74) Representative: **Boakes, Jason Carrington**
**Harrison Goddard Foote**
**106 Micklegate**
**York, YO1 6JX (GB)**

(54) **Intercell Interference cancellation in an OFDMA Broadband Wireless Access communication system**

(57) An apparatus and method for intercell interference cancellation in an OFDMA broadband wireless access communication system is provided. The method includes deriving a first channel estimate value of a desired signal and a first interference channel estimate value of an interference signal by using burst allocation information of selected sectors or cells; deriving a first noise estimate value using the first channel estimate values and the first interference channel estimate value; detecting an interference signal interfering the desired signal by using the first interference channel estimate value and the noise estimate value; deriving burst allocation information of the detected interference signal and the desired signal; and deriving a second channel estimate value of the desired signal and a second interference channel estimate value of the interference signal using the derived burst allocation information.

320

FFT OUTPUT FROM BS0 → **FIRST CHANNEL ESTIMATOR** (400) → **INTERFERENCE DETECTOR** (402) → **SECOND CHANNEL ESTIMATOR** (404)

INTERFERENCE BURSTS DECODED BIT FROM BS1,2 → **CODER** (406) → **MODULATOR** (408) → **SUBCHANNEL DEMAPPER** (410) → **SCRAMBLER** (412) → ⊗ (414) → ⊕ (416) →

FFT OUTPUT FROM BS0

**FIG.4**

EP 1 926 217 A2

**Description**

**PRIORITY**

This application claims the benefit under 35 U,S.C. § 119(a) of a Korean patent application filed on November 24, 2006 in the Korean Intellectual Property Office and assigned Serial No. 2006-0116859, the entire disclosure of which is hereby incorporated by reference.

**BACKGROUND OF THE INVENTION**

1. Field of the Invention:

The present invention relates to a receiving apparatus and method in a wireless communication system. More particularly, the present invention relates to an apparatus and method for canceling interference of a neighboring sector or cell in a broadband multiple access wireless communication system.

2. Description of the Related Art:

Communication systems were originally developed to provide voice services. Now, communication systems are being developed to provide packet data services and various multimedia services as well as voice services. An exemplary system capable of providing wireless packet data services is a third generation (3G) mobile communication system. The 3G mobile communication system provides various high speed multimedia services. The 3G mobile communication system distinguishes users using a Code Division Multiple Access (CDMA) scheme. The CDMA scheme distinguishes channels by allocating different orthogonal codes to users or to data transmitted to users.

However, the 3G mobile communication system fails to provide high speed data with high quality because of a lack of available codes. In other words, since the amount of usable codes are restricted, transmission rates are limited. To address this problem, researches and developers of mobile communication systems are considering a next-generation communication system which is referred to as the fourth generation (4G) broadband wireless communication system. The broadband wireless communication system is able to classify and transmit users or data to be sent, using an Orthogonal Frequency Division Multiple Access (OFDMA) scheme. The 4G wireless communication system features a high transmission rate of up to 100 Mbps. Furthermore, unlike the 3G system, the 4G system can provide services having various level of Quality of Service (QoS).

Currently, the 4G communication system is being developed to guarantee mobility and QoS in a Broadband Wireless Access (BWA) communication system such as wireless Local Area Network (LAN) system and wireless Metropolitan Area Network (MAN) system. Exemplary communication systems include the Institute of Electrical and Electronics Engineers (IEEE) 802.16d communication system and the IEEE 802.16e communication system. However, various other systems using the OFDMA scheme are under development.

As discussed above, the broadband wireless communication system adopts the OFDMA scheme, ensures mobility, and utilizes the same frequency in every cell to increase frequency efficiency.

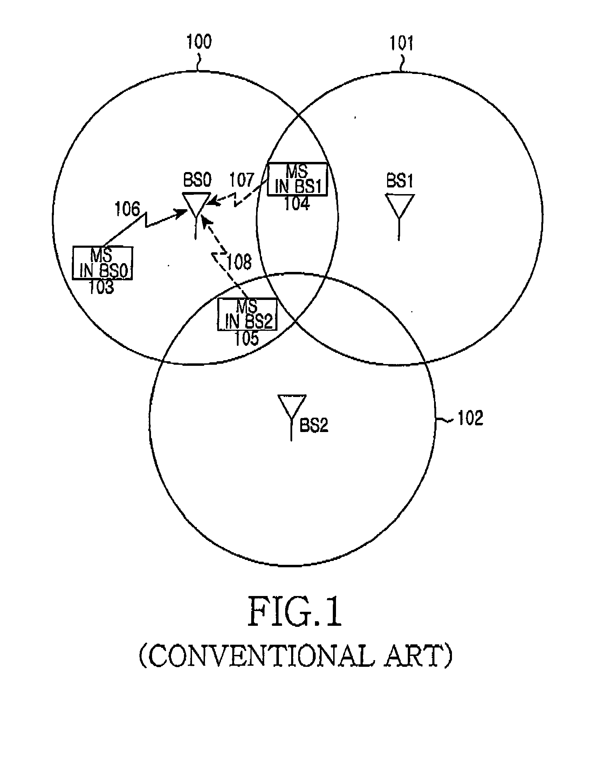

FIG. 1 is a simplified diagram of a conventional BWA system implemented with multiple cells.

In FIG. 1, Base Station (BS) 0, BS 1, and BS 2 are each communicating within their respective cells 100, 101 and 102 using the same frequency. In this situation, the multicell system has a frequency reutilization of '1,' thereby increasing its frequency efficiency. However, by using the same frequency in adjacent cells, the resulting inter-cell or inter-sector interference may impair the performance of the system.

For example, in view of a Mobile Station (MS) 103 communicating with BS 0, a transmit signal of an MS 104 communicating with BS 1 of the neighboring cell and a transmit signal of an MS 105 communicating with BS 2 of the neighboring cell acts as interference signals to BS 0. In other words, BS 0 receives the interference signals 107 and 108 in addition to the received signal 106 from MS 103 in its cell. The interference signals of the neighboring cells affects the signal of MS 103 in the corresponding cell and thus deteriorates demodulation performance.

Therefore, a need exists for an apparatus and method for canceling interference caused by neighboring cells in a multicell system.

**SUMMARY OF THE INVENTION**

An aspect of the present invention is to address at least the above problems and/or disadvantages and to provide at least the advantages below. Accordingly, an aspect of exemplary embodiments of the present invention is to provide an apparatus and method for canceling inter-sector or inter-cell interference in a broadband wireless communication system.

Another aspect of exemplary embodiments of the present invention is to provide an apparatus and method for estimating a channel by taking into account inter-sector or inter-cell interference in a broadband wireless communication system.

Yet another aspect of exemplary embodiments of the present invention is to provide an apparatus and method for channel-compensating received data by taking into account interference and for calculating a Carrier to Interference and Noise Ratio (CINR) with the compensated data in a broadband wireless communication system.

Still another aspect of exemplary embodiments of the present invention is to provide an apparatus and method for generating an interference signal using an estimated interference channel and demodulating a received signal by removing the interference signal from the received signal in a broadband wireless communication system.

The above aspects are achieved in an exemplary embodiment of the present invention by providing a receiver of a broadband wireless communication system. The receiver includes a first channel estimator for deriving a first channel estimate value of a desired signal and a first interference channel estimate value of an interference signal by using burst allocation information of one or more selected sectors or cells, and deriving a noise estimate value using the first channel estimate value and first interference channel estimate value; an interference detector for detecting an interference signal interfering with the desired signal by using the first interference channel estimate value and the noise estimate value provided from the first channel estimator, and outputting burst allocation information of the detected interference signal and the desired signal; and a second channel estimator for deriving a second channel estimate value of the desired signal and a second interference channel estimate value of the interference signal by using the burst allocation information provided from the interference detector.

The receiver may further include an interference signal generator for generating an interference signal using the second interference channel estimate value and decoded bits of one or more bursts from a corresponding interfering sector or cell; and a subtracter for generating a substantially interference-free signal by subtracting the generated interference signal from the received signal.

According to one aspect of an exemplary embodiment of the present invention, a receiving method in a broadband wireless communication system is provided. The method includes deriving a first channel estimate value of a desired signal and a first interference channel estimate value of an interference signal by using burst allocation information of selected sectors or cells; deriving a first noise estimate value using the first channel estimate value and the first interference channel estimate value; detecting an interference signal interfering the desired signal by using the first interference channel estimate value and the noise estimate value; deriving burst allocation information of the detected interference signal and the desired signal; and deriving a second channel estimate value of the desired signal and a second interference channel estimate value of the interference signal using the derived burst allocation information.

The receiving method may further include generating an interference signal using the second interference channel estimate value and decoded bits of one or more bursts from a corresponding interfering sector or cell; and generating a substantially interference-free signal by subtracting the generated interference signal from the received signal.

Other aspects, advantages, and salient features of the invention will become apparent to those skilled in the art from the following detailed description, which, taken in conjunction with the annexed drawings, discloses exemplary embodiments of the invention.


## BRIEF DESCRIPTION OF THE DRAWINGS

The above and other aspects, features and advantages of the present invention will become more apparent from the following detailed description when taken in conjunction with the accompanying drawings, in which:

FIG. 1 illustrates a conventional multicell BWA system;

FIG. 2 illustrates a receiver in a Broadband Wireless Access (BWA) system according to an exemplary embodiment of the present invention;

FIG. 3 illustrates a receiver in a BWA system according to another exemplary embodiment of the present invention;

FIG, 4 illustrates an interference remover according to an exemplary embodiment of the present invention;

FIG. 5 illustrates operations of a receiver in the broadband wireless communication system according to an exemplary embodiment of the present invention; and

FIG. 6 illustrates operations of a receiver in the broadband wireless communication system according to another exemplary embodiment of the present invention.

Throughout the drawings, it should be noted that like reference numbers are used to depict the same or similar elements, features and structures.

**DETAILED DESCRIPTION OF EXEMPLARY EMBODIMENTS**

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention provide a technique for canceling inter-cell or inter-sector interference in a Broadband Wireless Access (BWA) communication system.

While a BWA communication system is illustrated by way of example, the present invention is applicable to any multicell communication system. While a receiver of a Base Station (BS) is illustrated by way of example, the exemplary embodiments of the present invention are applicable to any receiver of the BS and any user terminal.

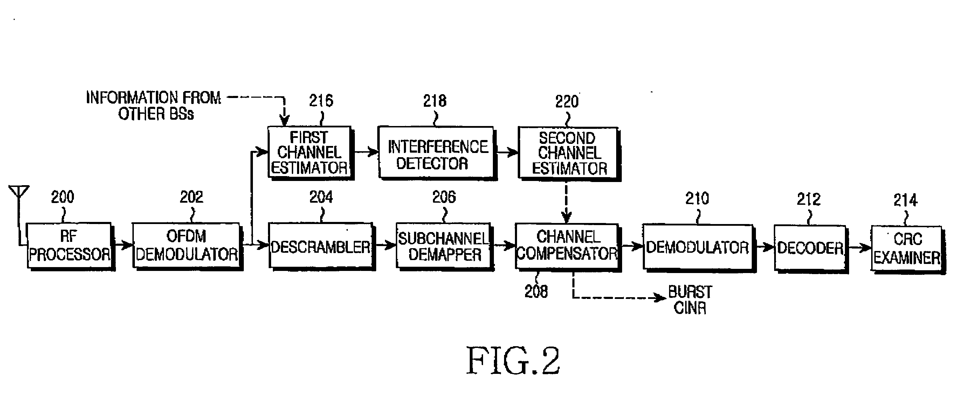

FIG. 2 illustrates a receiver in a BWA system according to an exemplary embodiment of the present invention.

The receiver of FIG. 2 includes a Radio Frequency (RF) processor 200, an Orthogonal Frequency Division Multiplexing (OFDM) demodulator 202, a descrambler 204, a subchannel demapper 206, a channel compensator 208, a demodulator 210, a decoder 212, a Cyclic Redundancy Check (CRC) examiner 214, a first channel estimator 216, an interference detector 218, and a second channel estimator 220. Hereafter, to ease the understanding of the present invention, a case where inter-sector interference is canceled is described. However, exemplary embodiments of the present invention are equally applicable to inter-cell interference.

The RF processor 200 includes components such as a filter and a frequency converter. The RF processor 200 converts an RF signal received by an antenna into a baseband signal and converts the baseband signal into a digital signal.

The OFDM demodulator 202 outputs frequency-domain data by Fast Fourier Transform (FFT)-processing the sample data fed from the RF processor 200. The descrambler 204 descrambles the data fed from the OFDM demodulator 202 with codes that are uniquely allocated to sectors.

The subchannel demapper 206 extracts and arranges data of bursts to be demodulated, from the data fed from the descrambler 204.

The first channel estimator 216 receives burst allocation information of selected sectors, such as sectors interfering with each other. Further, the first channel estimator 216 determines a burst allocation status of the sectors by analyzing the burst allocation information of the sectors. The burst allocation information can include a position and size of the allocated resource, the adopted subchannel scheme, and scrambling values masked to pilot symbols. The first channel estimator 216 extracts pilot symbols from the data fed from the OFDM demodulator 202 using the burst allocation status, and estimates values for channels and noise using the extracted pilot symbols and the scrambling codes uniquely allocated to the sectors. In doing so, the first channel estimator 216 derives a first channel estimate value of a desired signal and a first interference channel estimate value of an interference signal by using a Joint Channel Estimation (JCE), and derives a first noise estimate value for noise occurring in the desired sector using the first channel estimate value and first interference channel estimate value. While a desired signal and an interference signal are described herein, exemplary embodiments of the present invention are equally applicable with more than one desired signal and/or more than one interference signal.

The interference detector 218 detects the interference signal that is actually affecting the desired sector by using the first channel estimate value, the first interference channel estimate value and the noise estimate value provided from the first channel estimator 216, and derives burst allocation information of the sectors which substantially interfere. For example, the interference signal can be detected based on Equation (1).

$$\text{channel estimate value} > T \times \text{noise estimate value} \qquad \ldots(1)$$

In Equation (1), T is a preset value. When Equation (1) is satisfied, the interference signal that is actually causing the interference is determined.

The second channel estimator 220 derives a second channel estimate value, a second interference channel estimate and second noise estimate value by using the burst allocation information fed from the interference detector 218, Since the second channel estimator 220 performs the JCE with the interference signals that are actually causing the interference, it can achieve better estimation performance than the first channel estimator 216. The second channel estimator 220 calculates and outputs a total channel estimate values with respect to the burst to be demodulated.

The channel compensator 208 channel-compensates the burst data output from the subchannel demapper 206 using the total channel estimate values provided from the second channel estimator 220. The channel compensator 208 calculates a Carrier to Interference and Noise Ratio (CINR) using the second channel estimate value, the second interference channel estimate value and the second noise estimate value of the corresponding burst provided from the second channel estimator 220 and provides the calculated CINR to a controller (not shown). The CINR of the burst can be used for scheduling or power control.

The demodulator 210 demodulates the data output from the channel compensator 208. The demodulator 210 can generate and output a Log Likelihood Ratio (LLR) value for use in soft decision decoding.

The decoder 212 outputs an information bit string by decoding the data from the demodulator 210. The CRC examiner 214 extracts a CRC code from the information bit string provided from the decoder 212 and examines whether or not error occurs by comparing a CRC code generated from the received information bit string with the extracted CRC code.

According to the above exemplary embodiment of the present invention, the receiver which estimates the channels in consideration of the interference has been explained. In accordance with another exemplary embodiment of the present invention, interference can be canceled by directly generating interference signals using an interference control scheme. Hereafter, the technique for directly canceling interference is described.

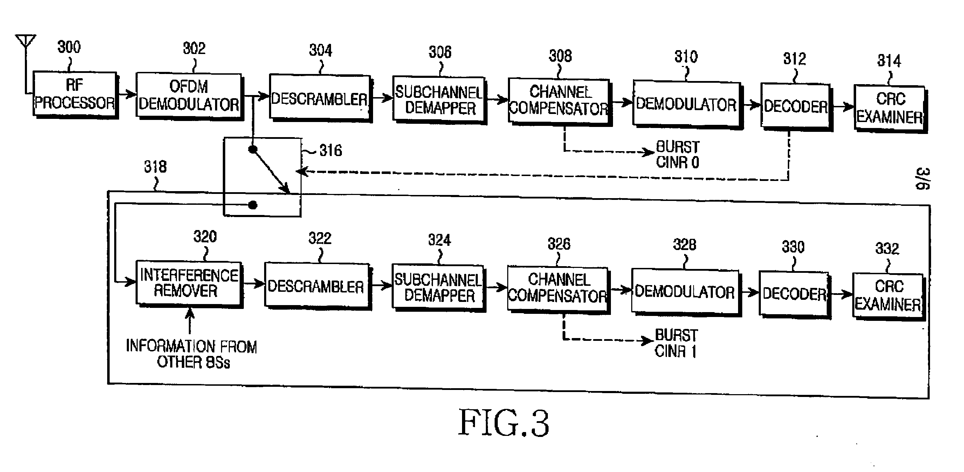

FIG. 3 illustrates a receiver in a BWA system according to another exemplary embodiment of the present invention.

The receiver of FIG. 3 includes an RF processor 300, an OFDM demodulator 302, a descrambler 304, a subchannel demapper 306, a channel compensator 308, a demodulator 310, a decoder 312, a CRC examiner 314, a switch 316, and an interference controller 318. The interference controller 318 includes an interference remover 320, a descrambler 322, a subchannel demapper 324, a channel compensator 326, a demodulator 328, a decoder 330, and a CRC examiner 332. To ease the understanding, the cancellation of the inter-sector interference is described as an example. However, exemplary embodiments of the present invention are equally applicable to inter-cell interference.

The RF processor 300 includes components such as a filter and a frequency converter. The RF processor 300 converts a RF signal received by an antenna into a baseband signal and converts the baseband signal into a digital signal. The OFDM demodulator 302 outputs frequency-domain data by FFT-processing the sample data output from the RF processor 300. The descrambler 304 descrambles the data output from the OFDM demodulator 304 with codes that are uniquely allocated to the sectors. The subchannel demapper 306 extracts and arranges data of bursts to be demodulated from the data fed from the descrambler 304.

The channel compensator 308 derives a channel estimation value for the burst and channel-compensates the burst data fed from the subchannel demapper 306 using the channel estimate value. The channel compensator 308 calculates a CINR (burst CINR0) using the channel estimate value and a noise estimate value of the burst and provides the calculated CINR to a controller (not shown). The CINR of the burst can be used for scheduling or power control.

The demodulator 310 demodulates the data output from the channel compensator 308. The demodulator 310 can generate and output a LLR value for use in soft decision decoding. The decoder 312 outputs an information bit string by decoding the data from the demodulator 310. The CRC examiner 314 extracts a CRC code from the information bit string fed from the decoder 312 and checks for error by comparing a CRC code generated from the received information bit string with the extracted CRC code. When an error occurs in the corresponding burst, the CRC examiner 314 activates the interference controller 318 by controlling the switch 316.

The switch 316 is switched under the control of the CRC examiner 314 to forward the data from the OFDM demodulator 302 to the interference remover 320 of the interference controller 318.

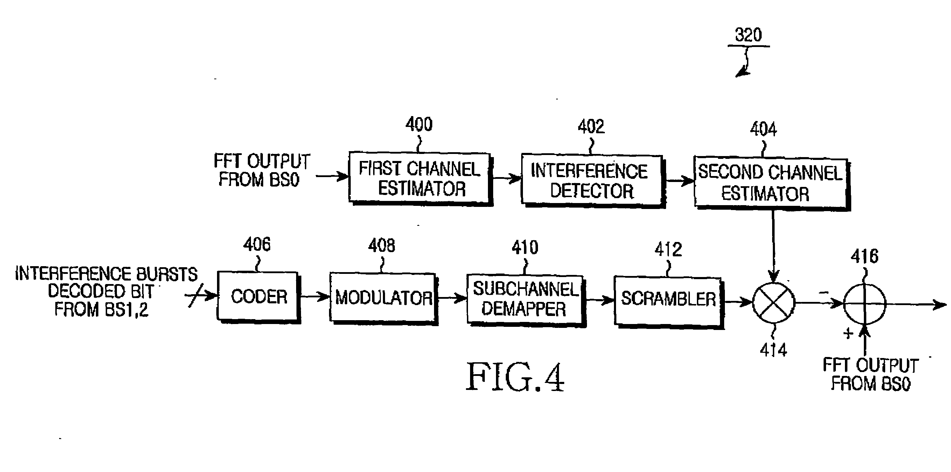

The interference remover 320 derives a interference channel estimate value of the interference signal using burst allocation information of the selected sectors, and generates an interference signal using the interference channel estimate value and interference burst decoded bits of the corresponding interfering sector. Next, the interference remover 320 generates a substantially interference-free signal by subtracting the interference signal from the received signal, which in this case is an OFDM demodulated signal. The detailed structure of the interference remover 320 will be explained by referring to FIG. 4.

The interference-free received signal at the output of interference remover 320 is converted into an information bit string by descrambler 322, CRC examiner 332 and the functional elements there between. Since the operations of the descrambler 322 to the CRC examiner 332 are the same as the operations of the descrambler 304 to the CRC examiner 314, further explanation shall be omitted. Meanwhile, the burst CINR (burst CINR1) calculated at the channel compensator 326 is based on the interference-free burst, and accordingly, it can be more accurate than the CINR (CINR0) calculated at the channel compensator 308. Hence, when scheduling is carried out with the CINR calculated at the channel compensator 326, system performance can be enhanced.

While the interference controller 318 is activated when an error has been detected by the CRC examiner 314 in the explanation of FIG. 3, the interference controller 318 can be activated even when no error has been detected by the CRC examiner 314. In this case, when no error has been detected by the CRC examiner 314, the interference controller 318 can calculate and provide only the burst CINR to the controller.

FIG. 4 illustrates an interference remover according to an exemplary embodiment of the present invention. The interference remover illustrated in FIG. 4 will be discussed, by way of example, as being the interference remover 320 of FIG. 3.

The interference remover 320 includes a first channel estimator 400, an interference detector 402, a second channel estimator 404, a coder 406, a modulator 408, a subchannel mapper 410, a scrambler 412, a multiplier 414, and a subtracter 416,

The first channel estimator 400 receives the OFDM demodulated data from the switch 316 and determines the burst allocation status of the sectors by analyzing the burst allocation information of the selected sectors. The selected sectors being the sectors that are interfering with each other. The first channel estimator 400 extracts pilot symbols from the OFDM demodulated data by using the burst allocation status, and derives a first channel estimate value, a first interference channel estimate value and a first noise estimate value by using the extracted pilot symbols and scrambling codes uniquely allocated to the sectors. In doing so, the first channel estimator 400 derives a first channel estimate value of the desired signal and a first interference channel estimate value of the interference signal by using the JCE. The first channel estimator 400 further derives a first noise estimate value of the actual noise in the desired sector by using the first channel estimate value and the first interference channel estimate value.

The interference detector 402 detects an interference signal that is actually affecting the desired sector by using first channel estimate value, the first interference channel estimate value and the noise estimate value provided from the first channel estimator 400, and derives burst allocation information of the actually interfering sectors. The interference signal can be detected in accordance with Equation (1).

The second channel estimator 404 re-estimates by using the burst allocation information output from the interference detector 402. The second channel estimator 404 calculates and outputs a second interference channel estimate value, such as the total channel estimate value of the burst of the interference signal. The second channel estimator 404 can acquire a more accurate estimation by using the updated burst allocation information. Hereafter, it is assumed that a single interference signal is detected.

The coder 406 receives the decoded bits of the burst determined as being the interference signal and encodes the decoded data. The decoded data of the burst determined as being the interference signal can be received from the corresponding neighbor sector or may be acquired by decoding the received signal with information of the burst. The information may include any of resource allocation information, a subchannel scheme, and a Modulation and Coding Scheme (MCS) level. The modulator 408 modulates the coded data fed from the coder 406. The subchannel mapper 410 rearranges the modulated data from the modulator 408 according to the subchannel scheme. The scrambler 412 scrambles the data from the subchannel mapper 410 with the code allocated to the corresponding neighbor sector.

The multiplier 414 generates the interference signal by multiplying the second interference channel estimate value from the second channel estimator 404 by data from the scrambler 412. The subtracter 416 subtracts the interference signal of the multiplier 414 from the OFDM demodulated signal of the switch 316. That is, the subtracter 416 substantially removes the interference signal from the received signal. The substantially interference-free signal is then fed to the descrambler 322.

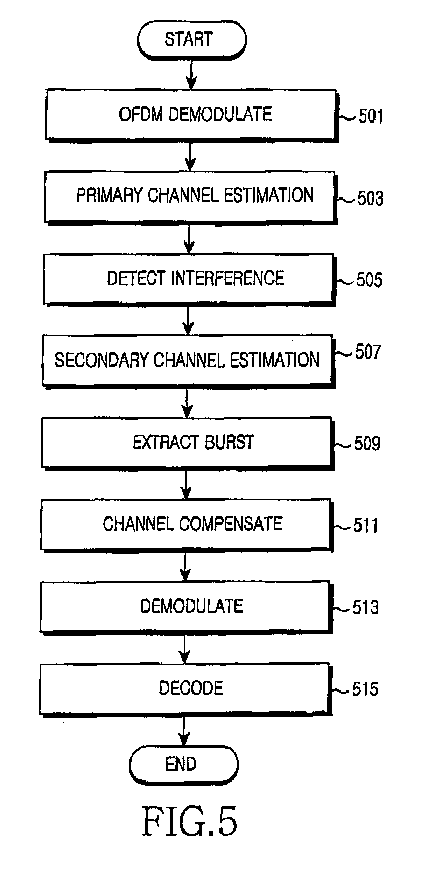

FIG. 5 illustrates operations of a receiver in the broadband wireless communication system according to an exemplary embodiment of the present invention.

In step 501, the receiver converts the RF signal received on the antenna into the baseband signal and OFDM-demodulates the baseband signal through an FFT operation.

In step 503, the receiver extracts the pilot symbols from the OFDM-demodulated data using the burst allocation information of the selected sectors, and performs the primary channel estimation using the extracted pilot symbols and the scrambling codes uniquely allocated to the sectors. In doing so, the receiver derives a channel estimate value of the desired signal and an interference channel estimate value of the interference signal, and accurately derives a noise estimate value of the actual noise in the desired sector by using the channel estimate value and interference channel estimate value.

After the primary channel estimation, in step 505, the receiver detects the interference signal actually affecting the desired sector using the channel estimate value, the interference channel estimate value and the noise estimate value acquired through the primary estimation, and derives the burst allocation information of the actually interfering sectors. The interference signal can be detected using Equation (1).

In step 507, the receiver performs the secondary channel estimation by using the burst allocation information of the actually interfering sectors. Since the receiver performs estimates by using the updated burst allocation information, a more accurate channel estimate value, interference channel estimate value and noise estimate value can be attained with respect to the burst to be demodulated.

After acquiring the estimates to be used for the channel compensation, the receiver extracts and arranges the burst data from the OFDM-demodulated data in step 509. In step 511, the receiver channel-compensates the burst data using the acquired channel estimate value. At this time, the CINR can be calculated using the channel estimate value, the interference channel estimate value and the noise estimate value of the burst. The CINR of the burst can be used for scheduling or power control.

Next, the receiver demodulates the channel-compensated data in step 513, and decodes the demodulated data into the information bit stream in step 515.

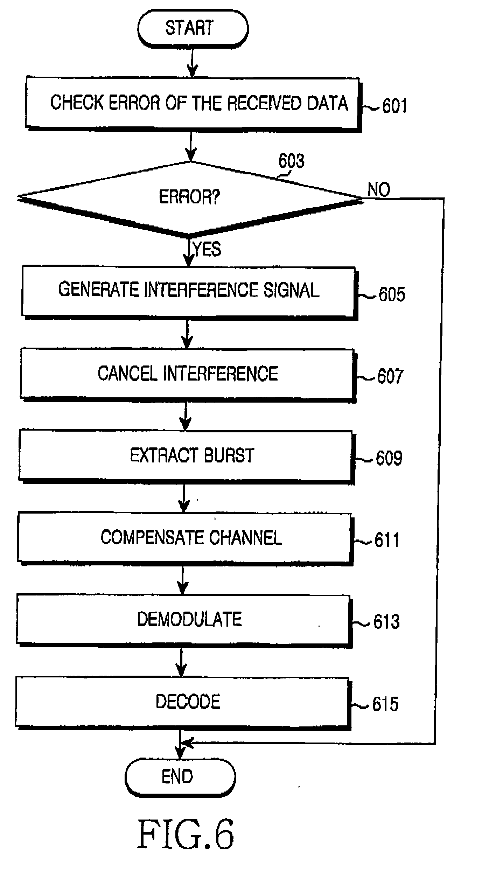

FIG. 6 illustrates operations of a receiver in the broadband wireless communication system according to another exemplary embodiment of the present invention.

In step 601, the receiver restores the information bit stream by OFDM-demodulating, channel-compensating, demodulating, and decoding the received signal, and performs the CRC with respect to the information bit stream. In step 603, the receiver determines whether error occurs in the received data based on the result of the CRC.

When no error has occurred, the receiver finishes this process. When an error has occurred, in step 605, the receiver determines an interference channel estimate value of the interference signal by using the burst allocation information of the selected sectors. The selected sectors being the s interfering with each other. Further, the receiver generates the interference signal using the interference channel estimate value and the decoded data of the corresponding interfering sector. The decoded data of the corresponding interfering sector is the decoded data of the burst. The decoded data of the interfering sector can be received from the corresponding neighbor sector. Alternatively, the decoded data of the interfering sector can be acquired by decoding the received signal with known information. Exemplary known information includes resource allocation information, subchannel scheme, and MCS level. The interference signal can be generated as many times as the number of the detected interference signals.

After generating the interference signal, the receiver generates a substantially interference-free signal by subtracting the interference signal from the received signal in step 607. The received signal being an OFDM-demodulated signal. In step 609, the receiver extracts the burst data from the substantially interference-free signal.

In step 611, the receiver derives a channel estimate value for the burst and channel-compensates the extracted burst data using the channel estimate value. At this time, the CINR can be calculated using the channel estimate value, the interference channel estimate value and the noise estimate value of the burst. The CINR of the burst can be used for scheduling or power control.

Next, the receiver demodulates the channel-compensated data in step 613, and restores the information bit stream by decoding the demodulated data in step 615.

While the interference cancellation is performed in steps 605 through 615 when the error is determined according to the CRC, the interference cancellation can be carried out at any time regardless of the result of the CRC. In this case, when no error is determined according to the CRC, the receiver can merely calculate the CINR for the corresponding burst in steps 605 through 611.

As set forth above, it is possible to detect an interference signal that is actually causing interference in the multicell wireless communication system where the inter-cell or the inter-sector interference exists. More accurate noise estimation is feasible by estimating a value for the channel of the interference signal. Above all, since the channels are estimated by considering the interference; that is, since accurate channel estimation is possible, the demodulation or the decoding performance can be enhanced. Further, the demodulation performance can be improved by directly generating the interference signal using the interference channel estimate value of the interference signal and removing the interference from the received signal. Therefore, the interference control scheme of the present invention can enhance the demodulation performance and increase cell capacity.

Certain aspects of the present invention can also be embodied as computer readable code on a computer readable recording medium. A computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. A receiver of a broadband wireless communication system, the receiver comprising:
   a first channel estimator for deriving a first channel estimate value of a desired signal and a first interference channel estimate value of an interference signal by using burst allocation information of one or more selected sectors or cells, and deriving a noise estimate value using the first channel estimate value and first interference channel estimate value;
   an interference detector for detecting an interference signal interfering with the desired signal by using the first interference channel estimate value and the noise estimate value provided from the first channel estimator, and outputting burst allocation information of the detected interference signal and the desired signal; and
a second channel estimator for deriving a second channel estimate value of the desired signal and a second interference channel estimate value of the interference signal by using the burst allocation information provided from the interference detector.

2. The receiver of claim 1, further comprising:

a channel compensator for channel-compensating received burst data using the second channel estimate value;
a demodulator for demodulating data output from the channel compensator; and
a decoder for decoding data output from the demodulator.

3. The receiver of claim 1, wherein the first and second channel estimators extract pilot symbols from the received data using the burst allocation information and perform a Joint Channel Estimation (JEC) using the extracted pilot symbols.

4. The receiver of claim 1, wherein the interference detector detects the interference signal based on the following equation:

channel estimate value > T $\times$ noise estimate value.

5. The receiver of claim 1, wherein the burst allocation information comprises at least one of a position of an allocated resource, a size of the allocated resource, a subchannel scheme, and a scrambling value masked to the pilot symbol.

6. The receiver of claim 2, further comprising:

an Orthogonal Frequency Division Multiplexing (OFDM)-demodulator for Fast Fourier Transform (FFT)-processing the received data and providing the FFT-processed data to the first channel estimator and a descrambler;
the descrambler for descrambling the data output from the OFDM demodulator with codes uniquely allocated to the sectors or cells; and
a subchannel demapper for extracting burst data to be demodulated from the data output from the descrambler and providing the extracted data to the channel compensator.

7. The receiver of claim 2, wherein the channel compensator calculates a Carrier to Interference and Noise Ratio (CINR) with respect to the burst by using the second channel estimate, the channel second interference channel estimate value, and a second noise estimate value provided from the second channel estimator.

8. The receiver of claim 1, further comprising:

an interference signal generator for generating an interference signal using the second interference channel estimate value and decoded bits of one or more bursts from a corresponding interfering sector or cell; and
a subtracter for generating a substantially interference-free signal by subtracting the generated interference signal from the received signal.

9. The receiver of claim 8, wherein the interference signal generator comprises:

a coder for encoding the decoded data;
a modulator for modulating the coded data output from the coder;
a subchannel mapper for arranging the modulated data output from the modulator according to a subchannel scheme;
a scrambler for scrambling the data from the subchannel mapper with a code allocated to the corresponding sector or cell; and
a multiplier for generating the interference signal by multiplying the data from the scrambler by the second interference channel estimate value.

10. The receiver of claim 8, further comprising:

a descrambler for descrambling the substantially interference-free data output from the subtracter with codes uniquely allocated to the sectors or cells;
a subchannel demapper for extracting burst data to be demodulated from the data output by the descrambler;
a channel compensator for channel-compensating the burst data output by the subchannel demapper;
a demodulator for demodulating the data output from the channel compensator; and
a decoder for restoring an information bit string by decoding the data output from the demodulator.

11. The receiver of claim 10, wherein the channel compensator calculates a CINR with respect to the substantially interference-free burst.

12. The receiver of claim 8, further comprising:

a receiving part for restoring an information bit stream by decoding the received signal through a first path; and
an error examiner for checking for error in the information bit stream and for activating a second path for the interference cancellation when there is an error.

13. A receiving method in a broadband wireless communication system, the method comprising:

deriving a first channel estimate value of a desired signal and a first interference channel estimate value of an interference signal by using burst allocation information of selected sectors or cells;
deriving a first noise estimate value using the first channel estimate values- and the first interference channel value;
detecting an interference signal interfering the desired signal by using the first interference channel estimate value and the noise estimate value;
deriving burst allocation information of the detected interference signal and the desired signal; and
deriving a second channel estimate value of the desired signal and a second interference channel estimate value of the interference signal using the derived burst allocation information.

14. The receiving method of claim 13, further comprising:

channel-compensating received burst data by using the second channel estimate value;
demodulating the channel-compensated data; and
restoring an information bit stream by decoding the demodulated data.

15. The receiving method of claim 13, wherein the deriving of the first and second estimate values comprises:

extracting pilot symbols from the received data using the burst allocation information; and
performing a Joint Channel Estimation (JCE) using the extracted pilot symbols.

16. The receiving method of claim 13, wherein the detecting of the interference signal includes detecting the interference signal based on the following equation:

channel estimate value $> T \times$ noise estimate value.

17. The receiving method of claim 13, wherein the burst allocation information comprises at least one of a position of an allocated resource, a size of the allocated resource, a subchannel scheme, and a scrambling value masked to the pilot symbol.

18. The receiving method of claim 14, further comprising:

Orthogonal Frequency Division Multiplexing (OFDM)-demodulating the received data through a Fast Fourier Transform (FFT) process;
descrambling the OFDM-demodulated data with codes uniquely allocated to sectors or cells; and
extracting the burst data from the descrambled data.

19. The receiving method of claim 14, further comprising:

calculating a Carrier to Interference and Noise Ratio (CTNR) with respect to the burst using the second channel estimate value, the second interference channel estimate value, and a second noise estimate value .

**20.** The receiving method of claim 13, further comprising:

generating an interference signal using the second interference channel estimate value and decoded bits of one or more bursts from a corresponding interfering sector or cell; and
generating a substantially interference-free signal by subtracting the generated interference signal from the received signal,

**21.** The receiving method of claim 20, wherein the generation of the interference signal comprises:

encoding and modulating the decoded data;
arranging the encoded and modulated data according to a subchannel scheme;
scrambling the arranged data with a code allocated to the corresponding sector or cell; and
generating the interference signal by multiplying the scrambled data by the second interference channel estimate value.

**22.** The receiving method of claim 20, further comprising:

descrambling the substantially interference-free data with codes uniquely allocated to the sectors or cells;
extracting and arranging burst data to be demodulated from the descrambled data;
channel-compensating the burst data; and
restoring an information bit stream by demodulating and decoding the channel-compensated data.

**23.** The receiving method of claim 22, further comprising:

calculating a CINR with respect to the substantially interference-free burst.

**24.** The receiving method of claim 20, further comprising:

restoring the information bit stream by decoding the received signal through a first path; and
checking for an error in the information bit stream and activating a second path for the interference cancellation when there is an error.

FIG.1
(CONVENTIONAL ART)

FIG.2

EP 1 926 217 A2

FIG.3

320

406 CODER

408 MODULATOR

410 SUBCHANNEL DEMAPPER

412 SCRAMBLER

400 FIRST CHANNEL ESTIMATOR

402 INTERFERENCE DETECTOR

404 SECOND CHANNEL ESTIMATOR

414

416

INTERFERENCE BURSTS DECODED BIT FROM BS1,2

FFT OUTPUT FROM BS0

FFT OUTPUT FROM BS0

FIG.4

START

OFDM DEMODULATE ~501

PRIMARY CHANNEL ESTIMATION ~503

DETECT INTERFERENCE ~505

SECONDARY CHANNEL ESTIMATION ~507

EXTRACT BURST ~509

CHANNEL COMPENSATE ~511

DEMODULATE ~513

DECODE ~515

END

FIG.5

```
                    ┌─────────┐
                    │  START  │
                    └─────────┘
                         │
                         ▼
        ┌────────────────────────────────────┐
        │   CHECK ERROR OF THE RECEIVED DATA  │──601
        └────────────────────────────────────┘
                         │
                         ▼
                        ╱╲           603
                      ╱    ╲        ╱
                    ╱        ╲              NO
                  ╱   ERROR?   ╲─────────────────┐
                    ╲        ╱                   │
                      ╲    ╱                      │
                        ╲╱                        │
                         │ YES                     │
                         ▼                         │
        ┌────────────────────────────────────┐    │
        │     GENERATE INTERFERENCE SIGNAL    │──605│
        └────────────────────────────────────┘    │
                         │                         │
                         ▼                         │
        ┌────────────────────────────────────┐    │
        │        CANCEL INTERFERENCE          │──607│
        └────────────────────────────────────┘    │
                         │                         │
                         ▼                         │
        ┌────────────────────────────────────┐    │
        │           EXTRACT BURST             │──609│
        └────────────────────────────────────┘    │
                         │                         │
                         ▼                         │
        ┌────────────────────────────────────┐    │
        │         COMPENSATE CHANNEL          │──611│
        └────────────────────────────────────┘    │
                         │                         │
                         ▼                         │
        ┌────────────────────────────────────┐    │
        │             DEMODULATE              │──613│
        └────────────────────────────────────┘    │
                         │                         │
                         ▼                         │
        ┌────────────────────────────────────┐    │
        │              DECODE                 │──615│
        └────────────────────────────────────┘    │
                         │                         │
                         ▼◄────────────────────────┘
                    ┌─────────┐
                    │   END   │
                    └─────────┘
```

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20060116859